# EUROPEAN PATENT APPLICATION

(11) **EP 2 661 948 A1**
(43) Date of publication of application: **13.11.2013**
(21) Application number: 13166705.7
(22) Date of filing: 06.05.2013
(51) Int. Cl.: A01C 7/08

(54) **A seed shutoff apparatus for a seed drill machine**

(30) Priority: 10.05.2012 IT VR20120088
(71) Applicant: Breviglieri S.p.A., 37054 Nogara (Verona) (IT)
(72) Inventor: Mattuzzi, Giampietro, 37054 Nogara (Verona) (IT)
(74) Representative: Lissandrini, Marco

(57) **Abstract**

This invention addresses the technical sector relating to agricultural machines and relates to a seed shutoff apparatus (100) for a seed drill machine (1), comprising: a plurality of shutters (101) which can be operatively associated with a seed container (2) of a seed drill machine (1) and reciprocatingly movable between an open operating configuration and a closed operating configuration for opening/closing corresponding openings (5) for the passage of seed flow from the container (2) to seed meters (3) of the machine (1), in such a way as to enable or shut off seeding, the shutters (101) being distinct from, and movable independently of, any seeding adjustment means (8) that may be present at the seed meters (3) of the machine; drive means for reciprocating the shutters (101) between the open and closed configurations of the seed passage openings (5). This invention also relates to a seed drill machine comprising this type of seed shutoff apparatus.

## Description

This invention addresses the technical sector of agricultural machines and relates to a seed shutoff apparatus for a seed drill machine.

As is known, mechanical seed drill machines are so-called "inanimate" agricultural machines since the seeding operations occur due to the effect of the dragging and natural rolling of certain mechanical parts of the machine in contact with the field.

A traditional mechanical seed drill machine comprises a seed container fixed to the frame of the machine and a plurality of seed meters, generally divided into two groups, one to the right and one to the left of the centre line of the drill machine.

Each seed meter comprises a seed distributor, positioned outside the container close to a corresponding seed passage opening on the container designed to enable the escape of the seeds from the container. Each seed distributor comprises a pair of seed wheels of different width, respectively one wheel for fine seeds and one wheel for large seeds. The seed wheels are designed to pick the seeds from the container and to send them to a seed duct in each seed meter. Depending on the product to be seeded, the fine seed wheel is used alone or both wheels are used simultaneously.

Normally, the fine seed wheel is keyed to a rotation shaft and drags the large seed wheel by means of a pin; during the seeding of large seeds, the wheels rotate as one with each other, while the pin is disengaged from the large seed wheel when fine seeds are seeded, in such a way as to enable the rotation of the fine seed wheel alone.

Furthermore, each seed meter comprises, outside the container and at each of the seed passage openings, means for adjusting the seeding, typically a flow gate which is manually movable between three operating positions:
- flow gate in closed position, to finish seeding at the edges of the field or to seed alternate rows;
- flow gate in intermediate position, for seeding fine seeds (alfalfa, clover, etc.), where there is a need to limit the passage of the seeds from the container to the distributors;
- flow gate in open position, for seeding large seeds (wheat, rye, peas, etc.).

The operations of engaging/disengaging the wheels and of adjusting the position of the flow gate are performed manually before seeding is started.

During seeding, a toothed drive wheel fixed to the frame of the drill machine rolls over the field and transmits motion to a speed variator, which adjusts the rotation of the mounting shaft on which the wheels of the seed distributors are keyed. In this way, it is possible to adjust the quantity of seed deposited on the field according to the seed type and the advancing speed of the drill machine over the field.

The distributors pick the seeds from the container through the seed passage openings and send them to the seed ducts. The seed ducts convey the seeds towards the field, while depositing them in a furrow made by a plurality of furrower elements cooperating with respective seed meters. Lastly, a plurality of seed-covering elements associated with respective seed meters covers the seeds with soil.

Mechanical seed drill machines perform seeding according to preset rows. Typically, each seed drill machine is designed to seed different types of product, such as for example wheat, rape, soya, alfalfa, clover, peas, beans and more.

Once they have germinated, most of these crops require treatment with pesticides, which are normally sprayed on the field by means of a transversal treatment bar (generally this is a spray bar) transported by a tractor or farm trailer.

For this reason, the need has been felt for some time to provide seed drill machines with systems capable of seed shutoff at the seed rows on which the tractor, and the related trailer (when present) will pass at a later stage to carry out the pesticide treatment.

Seed shutoff systems are called "tramlines" in technical jargon.

The known tramline systems allow seed shutoff on the right side and on the left side of the seed drill machine, both independently from each other, and simultaneously, depending on the situations. In particular, seed shutoff has to be adaptable to the track and width of the tractor wheels and the related trailer (when present); in other words, the rows in the field in which seeding is to be shut off must coincide with the tracks left on the ground by the tractor wheels and by those of the related trailer. Incidentally, it should be noted that the tracks left by the trailer, if any, coincide with - or in any case are contained within - those left by the tractor.

From a dimensional point of view, the seed drill machine and the treatment bar are selected in a coordinated manner, based on the field to be seeded and treated with pesticides. In particular, the seed drill machine is to be selected based on the capacity of the treatment bar and more precisely, in such a manner that the ratio between the length of the treatment bar and the width of the seeding work area of the seed drill machine is a whole number. For example, given a 12-metre bar, a seed drill machine is selected with a seeding work area which is 3 or 4 metres wide; in effect, it is only possible in this manner to treat a field with a whole number of consecutive passages and without leaving any part of the field untreated.

It should be noted that the treatment bar is fixed to the tractor or to the trailer at its own centre line, in such a way as to symmetrically protrude from both sides of the tractor or of the trailer.

Figure A shows a first operating example of a tramline system applied on a seed drill machine having a seeding work area of 3 metres, combined with a 15-metre long treatment bar. As may be noted, seed shutoff occurs simultaneously on the right and left sides of the drill machine, at the third passage over the field.

Figure B shows a second operating example, in which the same seed drill machine with seeding work area of 3 metres is combined with a 12-metre long treatment bar.

In this case, seed shutoff only occurs on the right side of the drill machine, at the second and third passage over the field. Seed shutoff on the right side is only due to the fact that the first passage is performed in the advancing direction indicated by the arrow in figure B; if the advancing direction of the first passage were changed, seed shutoff would occur on the left side of the drill machine.

In essence, figures A and B illustrate the different positioning of the tramline system on the same seed drill machine, according to the length of the treatment bar. Depending on the length of the treatment bar, the centre line of the bar is in effect changed, and consequently the position of the tractor and of the trailer is changed with respect to a reference point on the field.

Seed shutoff is managed by a control system which comprises sensors for detecting the number of passages of the seed drill machine over the field and actuators for activating the tramline system at the appropriate moment.

An example of a seed shutoff tramline system is shown in document DE 1937559. This tramline system interacts with the wheels of the seed distributors and is completely integrated within the seed drill machine. Disadvantageously, this system is therefore not installable on existing seed drill machines.

In accordance with a further known technique, tramline systems exist which act directly on the wheels of the seed distributors. In particular, these systems comprise pneumatic cylinders fixed outside the container and designed to disengage the wheels from their mounting shaft, to prevent them from rotating and therefore to inhibit seeds from being picked from the container.

The main drawback of these tramline systems is that they are extremely complicated to install. In particular, laborious design work is required to carefully dimension the pneumatic cylinders, in such a way as to allow fixing them between the different seed meters, and also to safely anchor them to the seed container. Therefore, disadvantageously these tramline systems do not lend themselves to being installed on existing seed drill machines. In any case, this installation complexity requires using specialized labour to prevent accidental breakage of the wheels, with subsequent increased management and labour costs.

In this context, this invention is based on the aim to propose a seed shutoff apparatus for a seed drill machine which overcomes the above mentioned drawbacks of the known art. More specifically, the aim of this invention is to provide a seed shutoff apparatus which is easy to install, both on new and existing machines. Another aim of this invention is to provide a seed shutoff apparatus which ensures numerous seed shutoff combinations.

Yet another aim of this invention is to provide a seed shutoff apparatus which allows the seed adjustment performed on the seed distributors and on the flow gates, to be kept unchanged.

Another aim of this invention is to provide a seed shutoff apparatus which does not require adjustments or operations for adjusting the operation of it.

The technical purposes indicated and the aims specified are substantially achieved by a seed shutoff apparatus which comprises the technical features described in one or more of the appended claims.

Further features and advantages of the invention are more apparent in the detailed description below, with reference to a preferred, non-limiting, embodiment of a seed shutoff apparatus for a seed drill machine as illustrated in the accompanying drawings, in which:
- figures A and B show two operating examples of a generic tramline system;
- figure 1 is a perspective view of a seed drill machine equipped with a seed shutoff apparatus according to this invention;
- figure 1A is an enlarged view of a construction detail of the seed shutoff apparatus applied to the machine shown in figure 1;
- figure 2 is an enlarged perspective view of seed meters of the machine shown in figure 1;
- figure 3 is a perspective view of a seed container of the machine shown in figure 1;

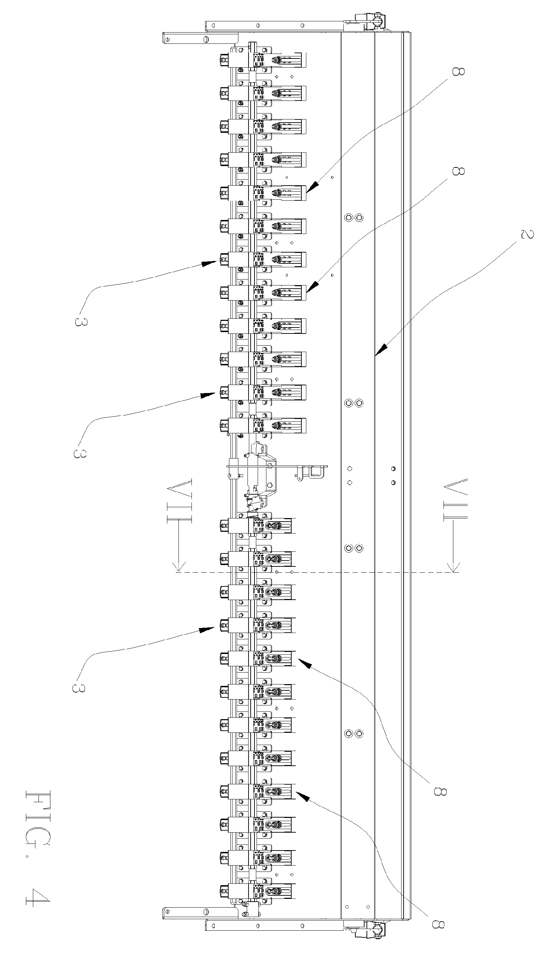

- figure 4 is a front view of the seed container and of the seed meters of the machine shown in figure 1;
- figure 5 shows a perspective cutaway view of the seed shutoff apparatus in a first operating configuration;
- figure 5A shows a construction detail of the apparatus shown in figure 5;
- figure 6 shows a side view of a construction detail of the seed shutoff apparatus in the first operating configuration;
- figure 7 shows, in a side view in cross section according to the plane VII-VII of figure 4, a construction detail of the seed shutoff apparatus in the first operating configuration;
- figure 7A is an enlarged view of the construction detail shown in figure 7;
- figure 8 shows a perspective cutaway view of the seed shutoff apparatus in a second operating configuration;
- figure 9 shows a side view of a construction detail of the seed shutoff apparatus in the second operating configuration;
- figure 10 shows, in a side view in cross section according to the plane VII-VII of figure 4, a construction detail of the seed shutoff apparatus in the second operating configuration;
- figure 10A is an enlarged view of the construction detail shown in figure 10.

With reference to the drawings, the numeral 1 denotes a mechanical seed drill machine in its entirety.

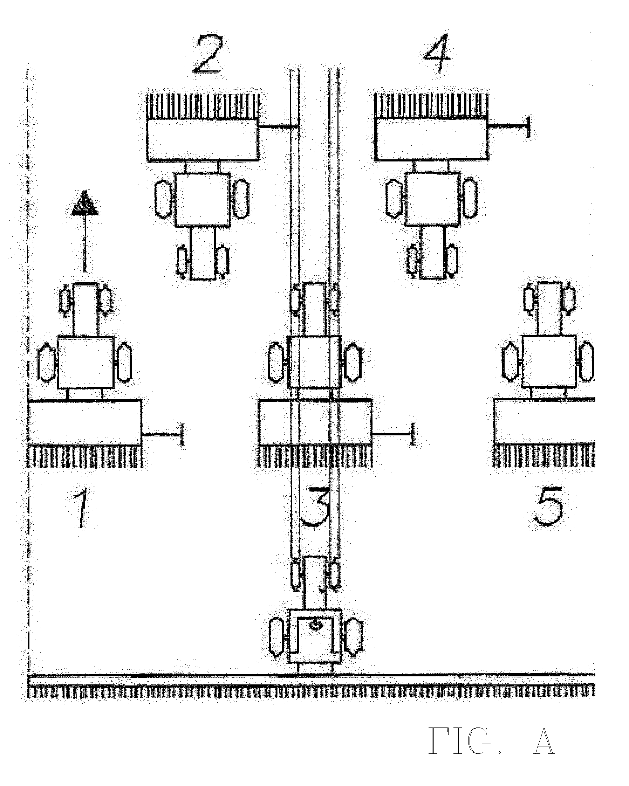

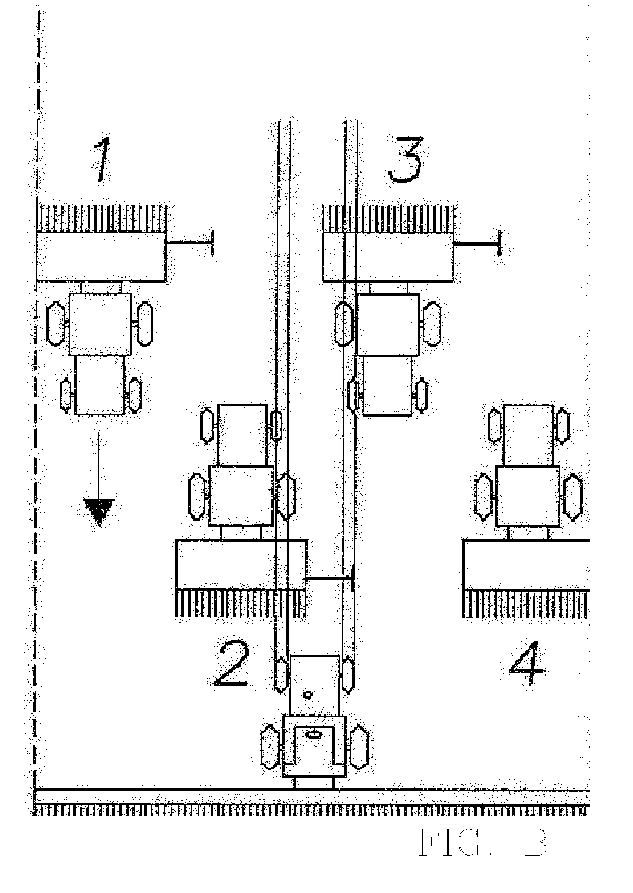

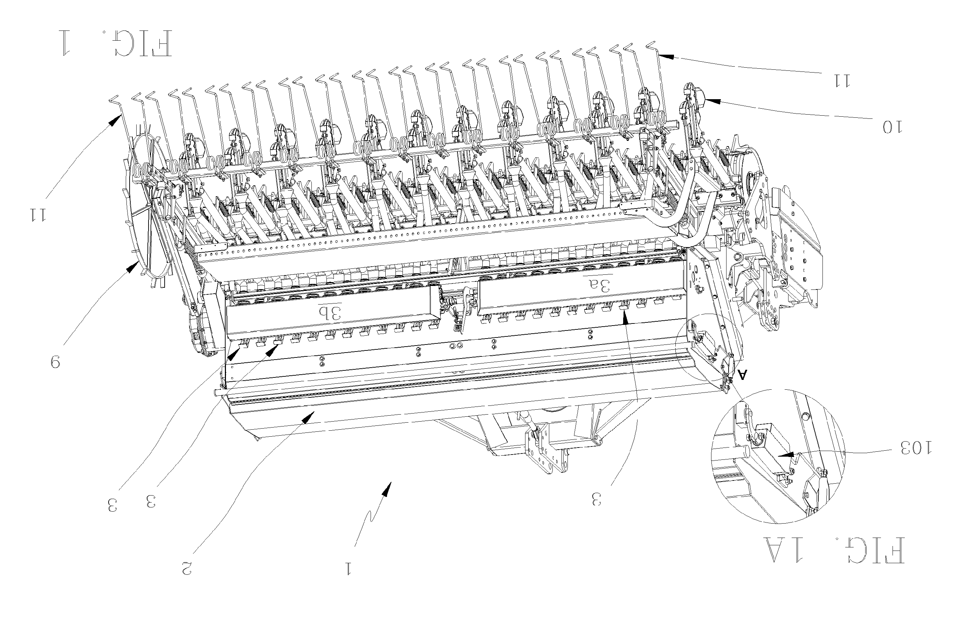

With reference to figure 1, the seed drill machine 1 comprises a seed container 2 fixed to a frame (not shown in the drawings) of the machine and a plurality of seed meters 3, divided into two groups 3a, 3b respectively to the right and to the left of the centre line of the seed drill machine.

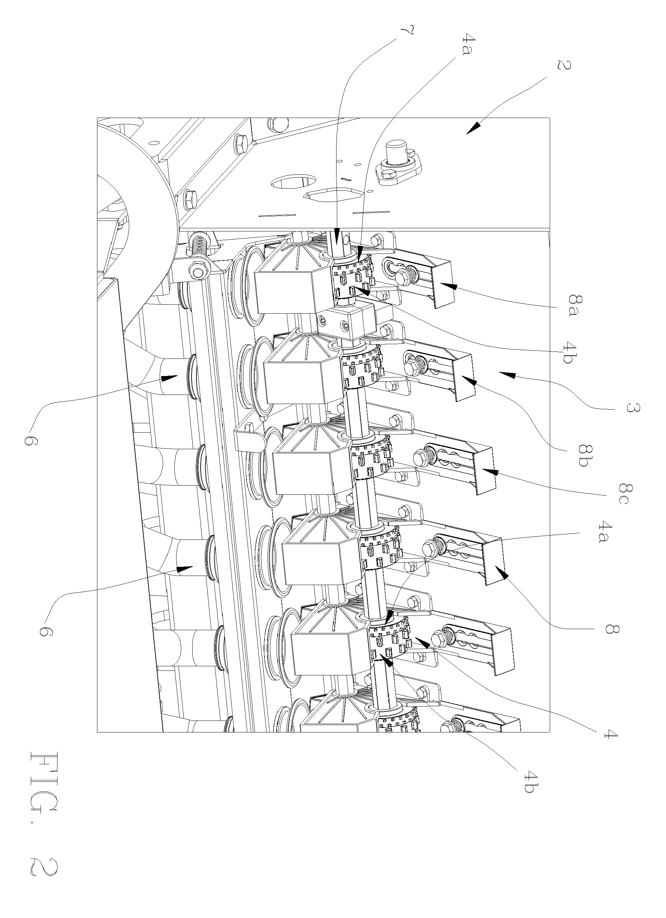

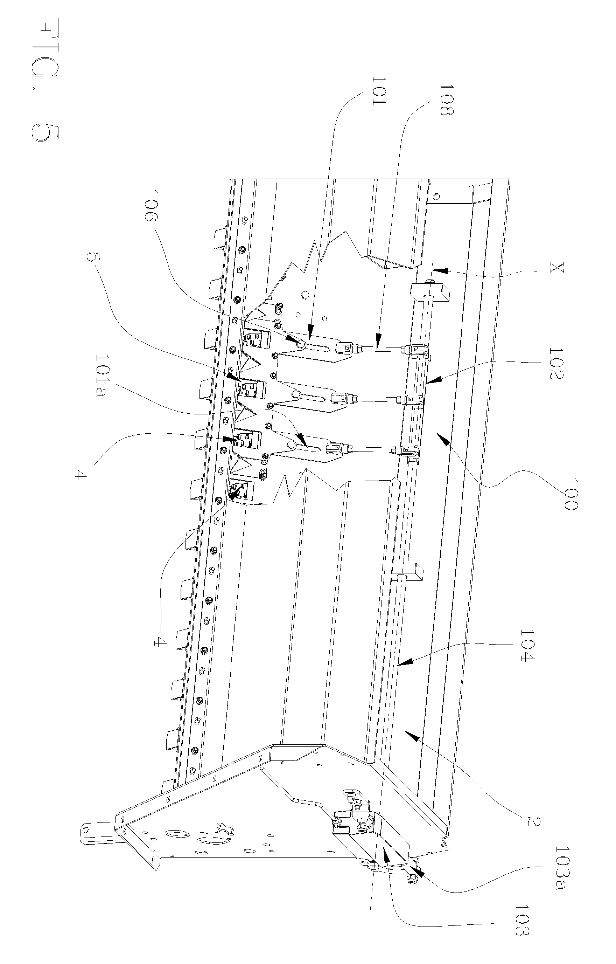

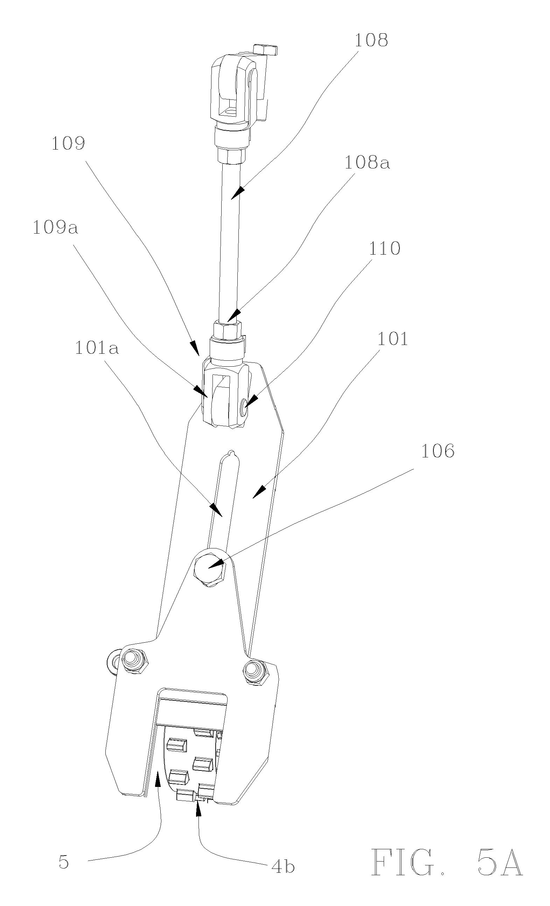

With reference to figure 2, each seed meter 3 comprises a seed distributor 4, positioned outside the container 2 close to a corresponding seed passage opening 5 (shown in figure 5) on the container and designed to enable the seed flow from the container to the distributor.

Each seed distributor 4 comprises a pair of seed wheels of different width, namely a fine seed wheel 4a and a large seed wheel 4b. The wheels are designed to pick the seeds from the container 2 and to send them to a seed duct 6 in each seed meter 3. Depending on the product to be seeded, the fine seed wheel 4a is used alone or both wheels are used simultaneously.

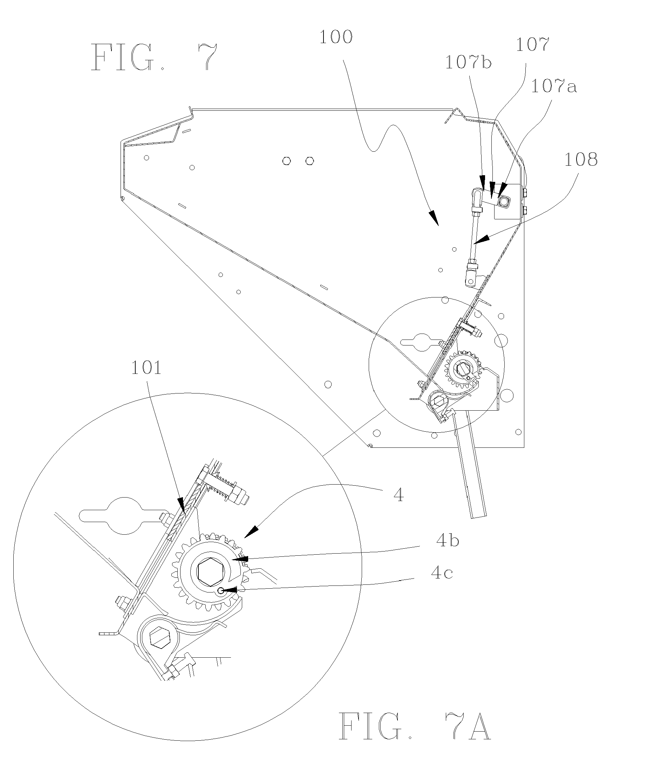

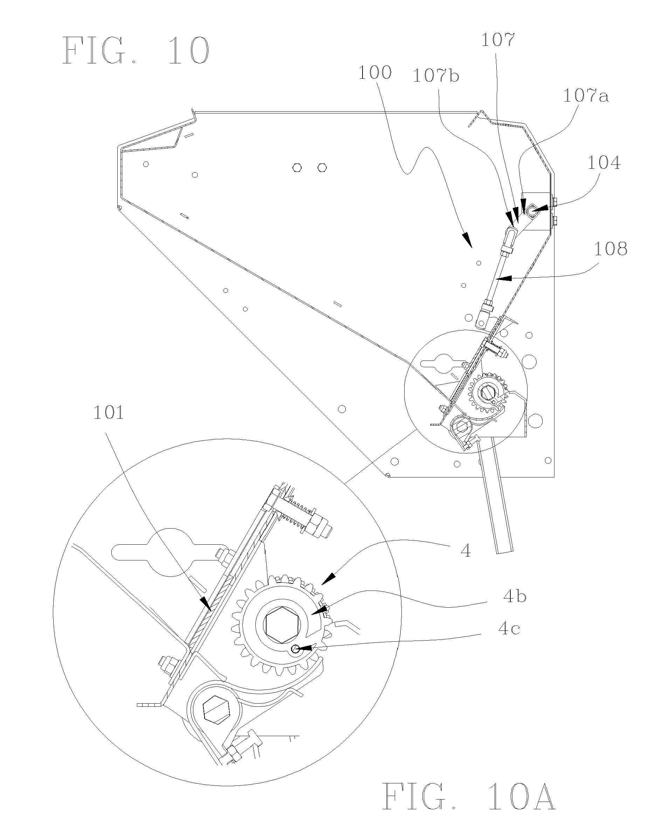

With reference to figure 2, the fine seed wheel 4a is keyed to a rotation shaft 7, preferably with a hexagonal cross section, and drags the large seed wheel 4b by means of a pin 4c (shown in figures 7A and 10A). During the seeding of large seeds, the wheels rotate as one with each other, while the pin 4c is disengaged from the large seed wheel 4b during the seeding of fine seeds, in such a way as to enable the rotation of the fine seed wheel 4a alone. To prevent the rotation of the large seed wheel 4b following the rotation of the shaft 7, the hub of the large seed wheel 4b advantageously has a circular cross section (shown in figures 7A and 10A), so that the rotation shaft 7, which has a hexagonal cross section, can rotate inside the hub without dragging the large seed wheel 4b with it.

With reference to figures 1 and 2, each seed meter 3 comprises, outside the container 2 and at each of the seed passage openings 5, seeding adjustment means 8. In the example illustrated, the seeding adjustment means 8 are defined by flow gates which are manually movable between three operating positions:
- flow gate in closed position (indicated with numeral 8a in figure 2), to finish seeding at the edges of the field or to seed alternate rows;
- flow gate in intermediate position (indicated with numeral 8b in figure 2), for seeding fine seeds (alfalfa, clover, etc.), where there is a need to limit the passage of the seeds from the container to the distributors;
- flow gate in open position (indicated with numeral 8c in figure 2), for seeding large seeds (wheat, rye, peas, etc.)

With reference to figure 1, during the seeding step, a toothed drive wheel 9 fixed to the frame of the seed drill machine 1 rolls over the field and transmits motion to a speed variator (not shown in the drawings), which adjusts the rotation of the mounting shaft 7 on which the wheels 4a, 4b of the seed distributors 4 are keyed. In this way, it is possible to adjust the quantity of seed deposited on the field according to the seed type and the advancing speed of the drill machine over the field.

The distributors 4 pick the seeds from the container through the seed passage openings 5 and send them to the seed ducts 6. The seed ducts convey the seeds towards the field, while depositing them in a furrow made by a plurality of furrower elements 10 cooperating with respective seed meters. Lastly, a plurality of seed-covering elements 11 associated with respective seed meters 3 covers the seeds with soil.

With reference to the drawings, in particular to figures 5, 7, 8 and 10, the seed drill machine 1 comprises a seed shutoff apparatus made in accordance with the invention and indicated in its entirety with the numeral 100.

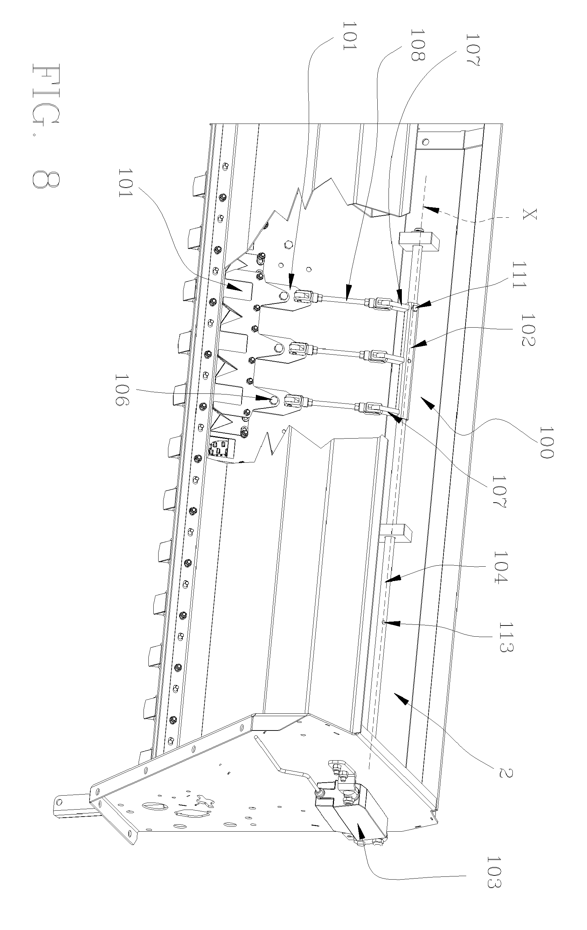

With particular reference to figures 5, 5A, 7A, 8 and 10A, the seed shutoff apparatus 100 comprises a plurality of shutters 101 which can be operatively associated with the seed container 2 and reciprocatingly movable between an open operating configuration (figures 5, 5A and 7A) and a closed operating configuration (figures 8 and 10A) for opening/closing just as many corresponding openings 5 for the passage of seed flow from the container 2 to the seed meters 3 of the seed drill machine 1. In this way, seeding is enabled or shut off at certain seed meters. Preferably, the shutters 101 can be positioned and moved inside the seed container 2. It should be noted that the shutters 101 are distinct elements from the seeding adjustment means 8 (flow gates) present in the seed meters 3 and are movable independently of these means.

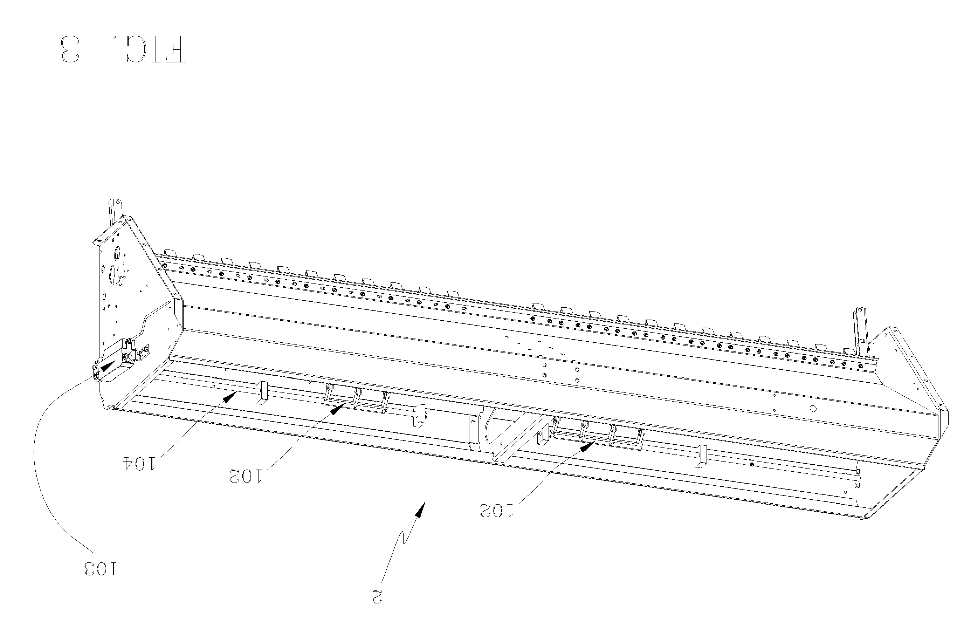

With particular reference to figures 3, 5 and 8, the shutters 101 are preferably connected to a slider 102 which is movable along a direction substantially parallel to the seed passage openings 5 of the seed container 2 until reaching a predetermined position of alignment between the shutters and a corresponding preset number of seed passage openings in such a way as to define a predetermined number of seed shutoff combinations. In particular, the slider 102 is locked in place upon reaching the predetermined position of alignment.

The seed shutoff apparatus 100 comprises drive means for reciprocating the shutters 101 between the open and closed configurations of the seed passage openings 5.

In the example illustrated, the drive means comprise a plurality of linkages kinematically connected to the shutters 101 and an actuator 103 for triggering the linkages. It should be noted that the shutters, the slider, if any, and the drive means can be installed both to the right and to the left of the centre line of the seed drill machine.

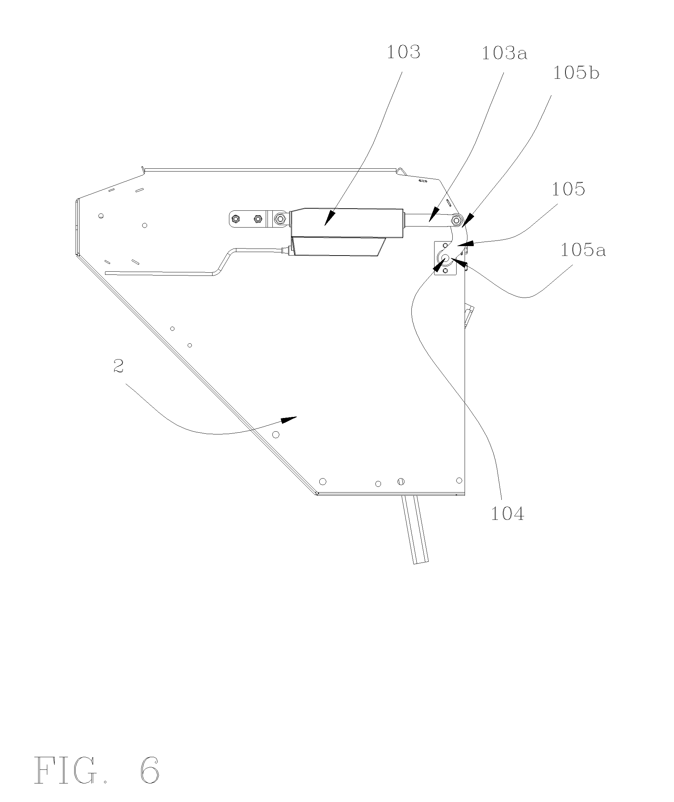

With particular reference to figures 5 to 10, the actuator 103 is preferably linear, but the possibility is contemplated for it to be of a different type, for example rotary. In the example illustrated, the actuator 103 is connectable to the seed container 2 and has a stem 103a which is movable by translation relative to the container 2. Still more preferably, the actuator is pneumatic.

The linkages comprise a mounting shaft 104 which can be hinged to the seed container 2 and which is movable by rotation about a horizontal hinge axis X (shown in figures 5 and 8). The linkages also comprise a first lever 105 having a first end 105a integral with the mounting shaft 104 and a second end 105b hinged to the stem 103a of the actuator 103, so that a translation of the stem corresponds to a translation of the second end 105b which causes a rotation of the first lever 105, and hence of the mounting shaft 104, about the horizontal hinge axis X.

With particular reference to drawings 5, 5A and 8, the linkages also comprise a sliding guide for a shutter. Preferably, the sliding guide is defined by a slot 101a formed in a shutter 101 and slidably associated with a pin 106 which is connectable as one with the seed container 2 of the seed drill machine 1.

The linkages also comprise a second lever 107 having a first end 107a integral with the mounting shaft 104 and a second end 107b hinged to a drive rod 108 connected to a shutter 101, so that a rotation of the mounting shaft 104 about the horizontal hinge axis X corresponds to a translation of a shutter 101 along the sliding guide. With particular reference to figure 5A, the seed shutoff apparatus in accordance with the invention also comprises means for adjusting the stroke of a shutter 101 along the sliding guide. In particular, the means for adjusting the stroke comprise a joint 109 which is removably connectable to a shutter 101 and which has at least one socket for receiving the whole or part of a connector portion 108a of the drive rod 108. In particular, the socket of the joint has a threading which is shaped to match a corresponding threading on the connector portion of the drive rod 108. The joint 109 has a fork 109a suited to support a connecting pin 110 which is adapted to be removably engaged in a connecting seat (not shown in the drawings) which is integral with a shutter 101. Advantageously, the means for adjusting the stroke of the drive rod 108 allow the seed shutoff apparatus to be adapted to the dimensions of the seed container.

With particular reference to figure 5, the slider 102 is slidably movable on the mounting shaft 104 until reaching a predetermined position of alignment between the shutters and a corresponding number of seed passage openings 5; in greater detail, the second lever 107 is connected as one with the slider 102. Upon reaching the predetermined position of alignment, the mounting shaft 104 and the slider 102 are connected to each other as one, so that the second lever 107 is also integral with the mounting shaft 104. Preferably, the connection between the mounting shaft 104 and the slider 102 occurs by means of a pin 111 designed to be simultaneously inserted into a hole 112 of the slider and into a specific seat 113 of the mounting shaft.

Next, the sliding of the shutter along the guide is ensured by inserting the pin 106 inside the slot 109 and fastening it to the container 2.

The seed shutoff apparatus according to the invention also comprises control means which are operatively connected to the drive means for moving the shutters according to operating parameters of the seed drill machine, in such a way as to open or close the seed passage openings to enable or shut off seeding. Preferably, the control means comprise an electronic processor and a plurality of sensors connected to it, designed to at least detect the number of passages by the tractor over the field. In effect, given the seeding start point and the known track of the tractor, the shutoff apparatus is only activated at preset passages by the tractor over the field, which are determined according to the ratio between the dimensions of the work area of the seed drill machine and those of the treatment bar which will subsequently spray the field with pesticides.

It should be noted in the following operating description of the invention that the seed shutoff apparatus is assumed to be in an initial condition where seeding is enabled (figures 5, 6, 7, 7A), that is to say, where all seed passage openings 5 of the container 2 are open, that is free of the shutters.

The invention operates as follows.

The control means activate the drive means at a preset passage of the seed drill machine over the field.

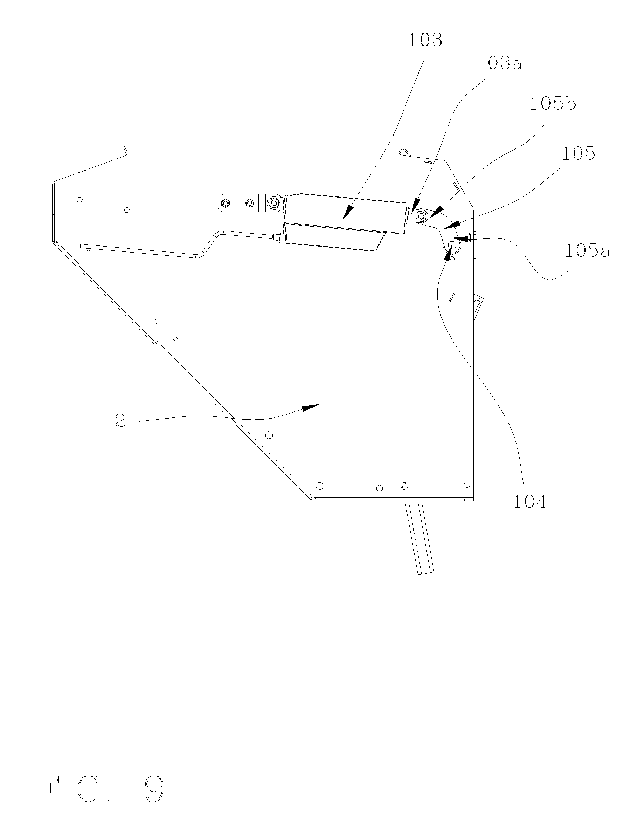

The stem 103a of the actuator 103 translates relative to the seed container 2 (figure 9), thus making the first lever 105 rotate about the horizontal hinge axis X. Being integral with the mounting shaft 104, said first lever 105 causes the rotation of the mounting shaft 104 about the same horizontal hinge axis X.

Hence as the mounting shaft 104 rotates, the second lever 107 - which is integral with the mounting shaft 104 (preferably by means of the interposition of the slider 102) - also rotates about the horizontal hinge axis X, thus causing a movement of the drive rod 8, which causes a translation of the shutter 101 along the sliding guide defined by the slot 109 and by the pin 106 (figures 8, 10, 10A). Upon reaching an end of stroke position of the drive rod 108, the shutter 101 takes on a totally closed operating position of the seed passage opening 5.

To bring the shutter 101 back to a seeding enable configuration, that is to say to restore the passage through the opening 5, the control means will activate a movement of the actuator 103 stem 103a in the direction opposite to the one which determined the closing of the seed passage opening 5 by the shutter.

The invention brings important advantages.

Firstly, a seed shutoff apparatus in accordance with the invention is easy to install, both on new and existing machines. In effect, the shutters and the linkages can be installed directly inside the container and therefore do not interfere in any way with the distributors or with the seeding adjustment means (flow gates). Therefore, installation on existing machines may also advantageously be performed by unskilled labour, with significant savings in management costs.

Secondly, a seed shutoff apparatus in accordance with the invention ensures numerous seed shutoff combinations. In effect, the presence of the slider 102 allows easily sliding the shutters parallel to the seed passage openings, thus locking them into place until they reach a predetermined position of alignment between the shutters and a preset number of seed passage openings, thus defining predetermined seed shutoff combinations. Advantageously, the shutters and the drive means can be installed both to the right and to the left of the centre line of the seed drill machine.

Even more advantageously, since the shutters and the linkages are positioned and movable inside the container, it is possible to keep unchanged the seed adjustment on the seed distributors and on the flow gates of each seed meter 3.

## Claims

1. A seed shutoff apparatus (100) for a seed drill machine (1), comprising:
- a plurality of shutters (101) which can be operatively associated with a seed container (2) of a seed drill machine (1) and reciprocatingly movable between an open operating configuration and a closed operating configuration for opening/closing corresponding openings (5) for the passage of seed flow from the container (2) to seed meters (3) of the machine (1), in such a way as to enable or shut off seeding, the shutters (101) being distinct from, and movable independently of, any seeding adjustment means (8) that may be present at the seed meters (3) of the machine;
- drive means for reciprocating the shutters (101) between the open and closed configurations of the seed passage openings (5), the drive means comprising a plurality of linkages (104,105,107,108) kinematically connected to the shutters (101) and an actuator (103) for triggering the movement of the linkages (104,105,107,108) for moving the shutters (101), **characterized in that** the actuator (103) is connectable to the seed container (2) and has a stem (103a) which is movable by translation; the linkages (104,105,107,108) comprise:
- a mounting shaft (104) which can be hinged to the seed container (2) and which is movable by rotation about a horizontal hinge axis (X);
- a first lever (105) having a first end (105a) integral with the mounting shaft (104) and a second end (105b) hinged to the stem (103a) of the actuator (103), so that a translation of the stem (103a) corresponds to a translation of the second end (105b) which causes a rotation of the first lever (105), and hence of the mounting shaft (104), about the horizontal hinge axis (X);
- a guide (101a,106) for the sliding of a shutter (101);
- a second lever (107) having a first end (107a) integral with the mounting shaft (104) and a second end (107b) hinged to a drive rod (108) connected to a shutter (101), so that a rotation of the mounting shaft (04) about the horizontal hinge axis (X) corresponds to a translation of a shutter (101) along the sliding guide (101a,106).

2. The apparatus according to claim 1, wherein the shutters (101) can be positioned and moved inside the seed container (2).

3. The apparatus according to either of the preceding claims, wherein the shutters (101) are connected to a slider (102) which is movable along a direction which, when the apparatus is associated with a seed container, is substantially parallel to seed passage openings (5) of the container (2), the slider being movable until reaching a predetermined position of alignment between the selfsame shutters (101) and a corresponding preset number of seed passage openings (5) in such a way as to define a predetermined number of seed shutoff combinations, the slider (102) being lockable in place upon reaching the position of alignment.

4. The apparatus according to claim 1, comprising means for adjusting the stroke of a shutter (101) along the sliding guide (101a,106).

5. The apparatus according to claim 4, wherein the means for adjusting the stroke of a shutter (101) comprise a joint (109) which is removably connectable to a shutter (101) and which has at least one socket for receiving the whole or part of a connector portion (108a) of the drive rod (108).

6. The apparatus according to claim 5, wherein the socket of the joint (109) has a threading which is shaped to match the threading on the connector portion (108a) of the drive rod (108).

7. The apparatus according to claim 6, wherein the joint (109) has a connecting pin (110) supported by a fork (109a), the pin (110) being adapted to be removably engaged in a connecting seat which is integral with a shutter (101).

8. The apparatus according to claim 1, wherein the sliding guide is defined by a slot (101a) formed in a shutter (101) and slidably associated with a pin (106) which is connectable as one with the seed container (2) of the seed drill machine (1).

9. The apparatus according to claim 1, wherein the slider (102) is slidably movable on the mounting shaft (104) until reaching the predetermined position of alignment, the second lever (107) being connected as one with the slider (102); the mounting shaft (104) and the slider (102) being connectable as one upon the reaching of the predetermined position of alignment.

10. The apparatus according to any of the preceding claims, comprising control means which are operatively connected to the drive means for moving the shutters (101) according to operating parameters of the seed drill machine (1), in such a way as to open or close the seed passage openings (5) to enable or shut off seeding.

11. A seed drill machine (1) comprising a seed container (2) having a plurality of openings (5) for the passage of seed flow from the container (2) to a corresponding plurality of seed meters (3), each seed meter (3) comprising a seed distributor (4) and seeding adjustment means (8), **characterized in that** it comprises a seed shutoff apparatus (100) according to any of the preceding claims.
